# EUROPEAN PATENT APPLICATION

(11) **EP 2 082 797 A1**
(43) Date of publication of application: **29.07.2009**
(21) Application number: 07076128.3
(22) Date of filing: 24.12.2007
(51) Int. Cl.: B01J 8/08, B01J 8/12, B01J 8/24, B01J 8/38, C08F 10/00

(54) **Reactor system for the catalytic polymerization of olefins comprising shielding means and a process and use thereof**

(71) Applicant: Borealis Technology OY, 06101 Porvoo (FI)
(72) Inventor: Bergstra, Michiel, 00810 Helsinki (FI); Eriksson, Erik, 00810 Helsinki (FI); Weickert, Gunter, 48683 Ahaus (DE)
(74) Representative: Prins, Hendrik Willem

(57) **Abstract**

The invention relates to a reactor system for the catalytic polymerization of olefin monomer and optionally comonomer(s), comprising one or more inlets for olefin monomer, catalyst, optionally for comonomer, chain growth controllers or chain transfer agents, and/or inert gas, an outlet for gas and an outlet for polymerization particles, which reactor system comprises at least one fluidized bed unit and at least one a moving bed unit, wherein the fluidized bed unit comprises means for maintaining a fluidized bed in the fluidized bed unit and wherein the moving bed unit is provided with an inlet and an outlet which are connected to the fluidized bed unit, wherein in the fluidized bed unit is positioned shielding means such that via the outlet of the moving bed unit inflow of fluidization gas is inhibited and outflow of polymerization particles allowed and to a process and use thereof.

## Description

The present invention relates to a reactor system and to a process for the catalytic polymerization of olefins, and to the use of such reactor system for catalytic polymerization of olefins.

The catalytic polymerization of olefins uses among others a catalyst of the Ziegler-Natta type. New generations of catalyst for olefin polymerization including single site catalysts have been developed in view of a more regular polymer structure. During the catalytic polymerization the olefin composition is substantially constant around the particle.

Polyolefins produced using a recent generation of Ziegler-Natta catalysts have a relative narrow molecular weight distribution. The breadth of the molecular weight distribution influences the rheology behaviour and the final mechanical properties of the produced polyolefins.

In order to obtain a broader bimodal molecular weight distribution, use is made of different reactor conditions, such as different concentrations for monomer, comonomer and/or hydrogen. Another option is the use of specific and/or combined catalysts.

Traditionally, cascaded reactors are used for applying different reaction conditions during the catalytic polymerization in order to obtain a broad or bimodal molecular weight distribution.

One such type of reactor is a fluidized bed gas phase reactor. In a fluidized bed gas phase reactor olefins are polymerized in the presence of a polymerization catalyst in an upwards moving gas stream. The reactor is typically a vertical cylindrical vessel containing the fluidized bed. The bed comprises growing polymer particles containing active catalyst dispersed therein. The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US 4933149 and EP 684871. Reactor gasses exiting the reactor are compressed and recycled. Make-up monomers and optionally hydrogen are added as needed. Entrained particles can be separated by an interposed cyclone and recycled to the polymerization reactor.

Traditionally from the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO 2005/087361. Other types of fluidization grids are disclosed, among others, in US 4578879, EP 600414 and EP 721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher than minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are known by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor, compressed and cooled in a heat exchanger to remove the heat of reaction. The gas is cooled to a temperature which is lower than that of the bed to prevent the bed from overheating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO 2007/025640, US 4543399, EP 699213 and WO 94/25495. It is also possible to add condensing agents into the recycle gas stream, as disclosed in EP 696293. The condensing agents are non-polymerisable components, such as propane, n-pentane, isopentane, n-butane or isobutane, which are at least partially condensed in the cooler.

Prior to the entry into the reactor fresh reactants are introduced into the fluidization gas stream to compensate for the losses caused by the reaction and product withdrawal. It is generally known to analyse the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Among others, WO01/05845 and EP 499759 disclose such methods. Where the gas phase reactor is a part of a reactor cascade the catalyst is usually dispersed within the polymer particles from the preceding polymerization stage. The polymer particles may be introduced into the gas phase reactor as disclosed in EP 1415999 and WO 00/26258.

The polymeric product may be withdrawn from the gas phase reactor either continuously or intermittently. Combinations of these methods may also be used. Continuous withdrawal is disclosed, among others, in WO 00/29452. Intermittent withdrawal is disclosed, among others, in US 4621952, EP 188125, EP 250169 and EP 579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed level.

Also antistatic agent(s) may be introduced into the gas phase reactor if needed. Suitable antistatic agents and methods to use them are disclosed, among others, in US 5026795, US 4803251, US 4532311, US 4855370 and EP 560035. They are usually polar compounds and include, among others, water, ketones and alcohols.

The reactor may also include a mechanical agitator to further facilitate mixing within the fluidized bed. An example of suitable agitator design is given in EP 707513.

Another type of such reactors is a moving bed reactor.

In the moving bed the catalytic polymerization conditions are different compared to those in the fluidized bed. First, the bed density is higher in the moving bed unit. Furthermore, in order to apply different polymerization conditions use is made of a separation fluidum in order to create different catalytic polymerization conditions. For example, a polymerization may be carried out at a lower concentration of a chaingrowth terminating agent such as hydrogen. Applying a separating fluidum to the moving bed unit results in a separation in reaction conditions between the fluidized bed unit and the moving bed unit. Preferably the separation fluidum is added into the moving bed, preferably to a level of from 0.1 to 0.7 of the total bed level of the moving bed above the base of the moving bed, and forms a cushion on the moving bed through which cushion of separating fluidum the particulate polymeric material settles on the forming moving bed. The separation fluidum may be a gas or a liquid or a mixture of a gas and a liquid. The separation fluidum may be inert to the catalytic polymerization such as nitrogen and C₁-C₁₂-alkane.

The separation fluidum may be reactive such as monomer, comonomer such as C₂-C₁₂-alkylene or mixtures thereof. Mixtures of inert and catalytic polymerization reactive separation fluidum may be used as desired.

Preferably, use is made of a separation fluidum which is a liquid which evaporates under the conditions residing during the catalytic polymerization in the moving bed. Accordingly, during evaporation a gas cushion of separating fluidum is formed and at the same time a cooling of the exothermic polymerization reaction occurs with at the same time a much higher reactant concentration when using reactive separation fluidum.

The addition of separation fluidum but also the reactant to both fluidized bed unit and moving bed unit may be such that in the fluidized bed unit and/or in the moving bed unit a condensed mode polymerization occurs which is beneficial to productivity.

It is further preferred when the separation fluidum comprises a polymerization monomer or comonomer or mixture thereof.

WO2004/111095 discloses a reactor system and a process for the catalytic polymerization of olefins. The reactor system comprises a fluidized bed unit and a moving bed unit which are integrated such that the residence time in the fluidized bed unit and the residence time in the moving bed unit could be independently controlled. The outlet of the moving bed unit connected to the fluidized bed unit could be provided with means for controlling the outflow rate of polymer particles from the moving bed unit into the fluidized bed unit.

The means for controlling the outflow of polymer particles are not further described in WO2004/111095.

The present invention has for its object to provide means having a good control of the outflow rate of polymer particles from the moving bed unit into the fluidized bed unit while the inflow of fluidization gas from the fluidized bed unit into the moving bed unit via the outlet of the moving bed unit is substantially avoided. This is true because the low gas velocity and the high reaction rate will increase the risk of a reactor interruption or plugging. Still there will be substantially no interference with the optimal functioning of the moving bed unit and of the fluidized bed unit.

Accordingly the present invention provides a reactor system for the catalytic polymerization of olefin monomer and optionally comonomer(s), comprising one or more inlets for olefin monomer, catalyst, optionally for comonomer, chain growth controllers or chain transfer agents, and/or inert gas, an outlet for gas and an outlet for polymerized particles, which reactor system comprises at least one fluidized bed unit and at least one moving bed unit, wherein the fluidized bed unit comprises means for maintaining a fluidized bed in the fluidized bed unit and wherein the moving bed unit is provided with an inlet and an outlet which are connected to the fluidized bed unit, wherein in the fluidized bed unit is positioned shielding means such that via the outlet of the moving bed unit inflow of fluidization gas is inhibited and outflow of polymerized particles allowed.

Due to the presence of the shielding means the fluidization gas flow towards the outlet of the moving bed unit is at least partly obstructed and the gas flow therefore is directed away from the moving bed outlet.

In principle, shielding of the outlet of the moving bed unit is already obtained when the shielding means comprise a shielding element positioned beneath the outlet of the moving bed unit. This shielding element has at least one surface facing against the fluidization gas flow and forming an obstruction to this fluidization gas flow. This surface may be flat and will have a relatively large impact on the flow pattern of the fluidization gas changed by the positioning of the flat shielding element. The flow pattern of the fluidization gas is less influenced and less obstructed when preferably the fluidization gas flow facing surface is diverging in the direction of the fluidization gas flow. This is an elegant and subtle manner in directing the fluidization gas away from the outlet of the moving bed unit.

Generally the shielding element has at least one surface facing the outlet of the moving bed unit. This moving bed unit facing surface may be flat. The flat surface allows the outflow of polymerized particles but will not sustain or improve the outflow. Furthermore, so-called "dead zones" where the gas velocity is zero and gas throughput limited, must be avoided. This outflow is sustained and improved when the outlet facing surface of the shielding element is diverging in the direction of the outflow of polymerized particles.

The flow of the fluidization gas and/or of the polymerized particles is optimally guided when the diverging angle between the surface of the shielding element is in the range of about 5° - 90°, preferably within the range of 10°-80°, more preferably with the range of 15°-65°. Particular selections of such angle will be dependant on the residing flow conditions of both the fluidization gas and the polymerized particles and will be determined using routine calculations and experimentation.

According to a first embodiment in shielding the outlet of the moving bed unit from the fluidization gas directed towards this outlet, is obtained when the shielding means are positioned near the outlet of the moving bed unit. The distance in between the shielding means and the outlet of the moving bed unit is determined by the dimensions of the outlet of the moving bed unit on the one hand and the dimensions of the fluidization bed unit and/or fluidization gas flow on the other hand.

According to another embodiment are the shielding means provided with pneumatic displacement means. The pneumatic displacement means exert a suction pressure at the outlet of the moving bed unit thereby facilitating or improving the outflow of polymer particles. The pneumatic means due to the pneumatic gas stream will resist the substantially counter current fluidization gas stream thereby decreasing or inhibiting the inflow of fluidization gas via the outlet into the moving bed unit. Accordingly, the residence time of the polymer particles in the moving bed unit is controlled.

An optimal pneumatic effect of the displacement means on the polymer particles in or near the outlet of the moving bed unit is obtained, if preferably the pneumatic displacement means comprise means for sidewise directing gas at the outlet of the moving bed unit. The sidewise directed gas provides for an optimal suction pressure on the polymer particles in the outlet of the moving bed.

In general it is possible to use for the pneumatic displacement means an external gas source. However, it is preferred to use fluidization gas. For reasons that by using fluidization gas the conditions residing in the fluidized bed unit will substantially not be effected, and the total amount of fluidization gas fed into the fluidized bed unit will be constant. Accordingly, it is preferred that the pneumatic displacing means comprise an inlet for fluidization gas. According to another preferred embodiment all fluidization gas may enter the fluidized bed unit via the pneumatic displacement means and to that extent the means for maintaining the fluidized bed comprise an inlet for fluidization gas, which inlet is connected to the pneumatic displacing means.

It is preferred that the pneumatic displacement means comprise lateral deflecting means connected to the outlet of the moving bed unit, which deflecting means comprise the means for sidewise directing gas at the outlet of the moving bed unit. For the sidewise directed gas flow gas from several sources may be used. However, it is preferred to use fluidization gas which is at least partly originating from the fluidized gas circulation. Accordingly, it is possible to control the flow rate of polymer particles out of the moving bed unit independently of the fluidization conditions within the fluidized bed unit. Accordingly, a reactor system is obtained with maximum flexibility.

It is preferred that the pneumatic displacement means comprise means for upwards directing fluidization gas along the lateral deflecting means. Accordingly, it is essentially possible to avoid the use of a distribution plate for distributing the fluidized gas in the fluidized bed unit. This is especially true because of the highly controlled and fast powder circulation that leads to a better gas distribution. Accordingly, the risk for fouling is further reduced.

It is possible that the moving bed unit recites within, around or adjacent the fluidized bed unit. The location of the moving bed unit is therefore flexible and may be determined in relation to the actual reactor design to be used for a particular catalytic polymerization of olefins.

According to another embodiment the shielding means may be positioned near or on the distribution plate of the fluidized bed unit. Accordingly the fluidization gas flow is already directed away from the outlet of the moving bed unit when this fluidization gas flow enters the moving bed unit in particular above the distribution plate. It is noted that under these circumstances it is possible to position the shielding means near the inlet of the fluidization bed unit such that a fluidized bed is maintained within the fluidized bed unit.

Generally, it is possible that the moving bed unit resides within, around or adjacent the fluidized bed unit. Relevant in relation to the position of the moving bed unit in relation to the fluidized bed unit is that there is a sufficient communication in between the fluidized bed unit and moving bed unit so that the polymerized particles may be subjected to different polymerization conditions in the fluidized bed unit and in the moving bed unit dependent on a controlled residence time in both units and in the reactor system as a whole.

Another aspect of the present invention relates to a process for the catalytic polymerization of olefins, wherein olefins are polymerized with a particulate catalyst, and optionally comonomer, chain growth controllers or chain transfer agents, and/or inert gas, wherein at least part of the polymerization reaction is carried out in a reactor system comprising at least one fluidized bed unit and at least one moving bed unit, wherein the fluidized bed unit comprises means for maintaining a fluidized bed in the fluidized bed unit and wherein the moving bed unit is provided with an inlet and an outlet which are connected to the fluidized bed unit, wherein the fluidized gas flow is shielded by shielding means such as to inhibit the inflow of fluidized gas into the moving bed unit and allow the outflow of polymerization particles.

As indicated above the shielding means may be used for shielding the outlet of the moving bed unit against the flow of the fluidization gas which is counter current to the outflow of polymerized particles from the outlet of the moving bed unit. On the other hand, it is also possible to promote and maintain the outflow of polymerized particles from the moving bed unit by particular structure surfaces of the shielding means. Preferably the structuring is such that the shielding means diverge the outflow of polymerized particles from the outlet and diverge the fluidized gas outflow.

According to a preferred embodiment the separation fluidum is supplied to the moving bed, preferably via the displacement means, and preferably the separation fluidum is a gas or a liquid and selected from the group comprising an inert gas or liquid, such as nitrogen, C₁-C₁₂-alkane or olefins such as C₂-C₁₂-alkylene, or mixtures thereof, and preferably the separation fluidum is a liquid evaporating under the residing polymerization conditions. Accordingly the polymerization conditions in the moving bed unit are different and maintained different during operation of the reactor system. Accordingly it is possible that liquid olefins are added as separation fluidum such that the polymerization in the moving bed unit is a condensed mode polymerization and/or that liquid olefins are added to the fluidized bed such that the polymerization in the fluidized bed is in a condensed mode polymerization. In this respect it is noted that according to a preferred embodiment the separation fluidum comprises a polymerizing monomer or comonomer, or mixture thereof.

Finally the invention also relates to the use of such above described reactor system in the catalytic polymerization of olefins.

Mentioned in other features of the reactor system the process and use of such reactor system will be further illustrated by reference to several embodiments which are only given for information purposes and not intended to restrict the invention to any extent. Reference will be made to the accompanying drawings wherein:

figures 1,2,3 and 5 are schematic illustrations of various embodiments of the reactor system according to the invention;

figure 4 is a side view of another embodiment of the shielding means according to the invention; and

figures 6-8 are schematic illustrations of other embodiments of shielding means further comprising pneumatic displacement means.

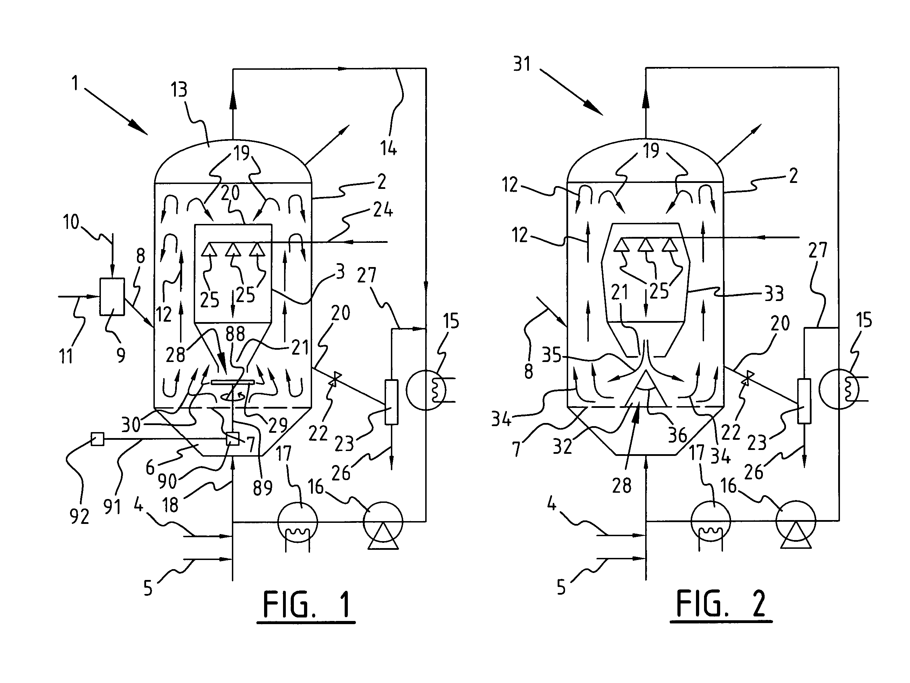

Figure 1 shows a reactor system 1 according to the invention for the catalytic polymerization of olefins. Olefins used in the process according to the invention comprise C₂-C₁₂-olefins, preferably C₂-C₈-olefins such as ethylene, propylene, butene-1, pentene-1, hexene-1, 4-methylpentene-1 and octene-1. These olefins may also be used for the production of homopolymers. Copolymers may be produced by using for instance ethylene and/or propylene in combination with other C₂-C₈-alpha-olefins. Polyenes may be used for copolymerization, such as dienes, for instance 1,4-butadiene, 1,6-hexadiene, dicyclopentadiene, ethylidene norbornene and vinyl norbornene.

In the catalytic polymerization Ziegler-Natta-catalysts are used which are conventional catalysts available in the art. The catalyst could be selected as desired in view of the ultimate polymer properties.

This reactor system 1 may be a part of a multi-stage process for producing polyolefins, in particular multimodal polyolefins and polyolefins with a broad molecular weight distribution. In this multi-stage process the first reactor is generally a liquid phase reactor as is for example described in EP-A-0 517 868. The first reactor is generally a loop reactor wherein olefins are polymerized in an inert hydrocarbon medium. Preferably, this inert hydrocarbon medium is a low boiling hydrocarbon which could be selected from the group comprising propane, butane, isobutane, pentane, hexane, heptane, octane, cyclohexane and cycloheptane or other inert media. Obviously mixtures of those hydrocarbons could be used as well.

In the reactor the polymerisation is preferably carried out at a temperature of about 60°C to 110°C at a pressure of 40-90 bar.

This first polymerization can be carried out under supercritical conditions, wherein the polymerization temperature and pressure are above the corresponding critical points of the mixture formed by the olefins, hydrogen, and fluidum of the inert low boiling hydrocarbon. The temperature and pressure in this first reactor are preferably about 85°C - 110°C and 50-90 bar, respectively. By using supercritical conditions it is possible to use higher hydrogen and ethylene concentrations than would be possible under sub-critical conditions.

The reaction mixture is removed from the first reactor either continuously or intermittently. Preferably, hydrogen, non-consumed reactants and inert low boiling hydrocarbons are removed preferably by flashing. The remaining gas stream comprising polymer are fed into the reactor system 1 as shown in figure 1. The reactor system 1 comprises a fluidized bed unit 2 and a moving bed unit 3.

Monomer is entering the fluidized bed unit via line 4 and optionally via line 5 inert gas, comonomer and/or hydrogen are added. Via a lower space 6 and a gas distribution plate 7, the reaction gas enters the fluidized bed unit 2.

Polymer originating from the previous polymerization is added via line 10 to a unit 9 from where it is transported via line 8 into the fluidized bed unit 2. Other catalyst components may be added to the unit 9 via a line 11.

The moving bed unit 3 resides coaxially in the cylindrical fluidized bed unit 2. Sidewise around the moving bed unit 3 is generated and maintained a fluidized bed of catalytic particles on which particle due to the polymerization reaction further polymer is formed. The composition of the polymer formed is dependant on the residing conditions, such as the concentration of monomer, comonomer, inert gas and hydrogen. The fluidized bed circulation is visualised by the arrows 12. At the top of the fluidized bed reactor polymer particles are separated from gas in a disengaging section 13. The gas leaves the fluidized bed unit via a recirculation line 14. Gas present in line 14 may be optionally cooled in a heat exchanger 15. Subsequently the gas is compressed in a compressor 16 and after cooling in a heat exchanger 17 re-added to the fluidized bed unit via the inlet 18.

A part of the polymer particles in the fluidized bed unit (visualised by arrows 19) enter the moving bed unit 3 and form a bed of settled polymer particles which move slowly downwards in a more or less plug stream towards an outlet 21.

On top of the downwards moving bed of polymer particles is formed a cushion of separation of fluidum which is added via the lines 24 and nozzles 25.

Constantly or intermittently polymer is removed via an outlet 20 provided with a valve 22 and directed to a separator 23. In the separator 23 polymer particles are separated and removed via the outlet 26. Gaseous material is recycled via a line 27 into the recirculation line 14.

Shielding means 28 having the form of a flat plate 29 are positioned in the fluidized bed unit 2 beneath the outlet 21 of the moving bed 3. The flat plate 29 is rotationally driven (arrow 88) by a rotation shaft 89 connected via a gearbox 90 and motor shaft 91 to a motor 92. As shown by the arrows 30, the flow of fluidized gas is directed away from the outlet 21 of the moving bed unit 3. Accordingly the ingress of fluidization gas into the moving bed unit 3 via the outlet 21 is substantially avoided due to an obstruction of the fluidized gas flow in this direction. However, the outflow of polymerized particles from the moving bed unit 3 via the outlet 21 is substantially unhindered and therefore allowed. The polymer particles leaving radially the rotating plate 29 are entrained with the fluidization gas.

Figure 2 shows another reactor system 31 according to the invention. Items considered similar in relation to the reactor system 1 have been identified with the same reference numbers.

The shielding means 28 according to the invention comprise in this embodiment a conical shaped element 32 which is positioned on the distribution plate 7 thereby blocking fluidized gas flow into the fluidized bed unit 2 beneath the outlet 21 of the moving bed unit 33. The flow pattern of fluidized gas as illustrated by the arrows 34 is changed relative to the positioning of the conical shield element 32 according to the invention.

This conical element 32 has a circumferential surface which diverges in the direction of the polymerized particles outflow 35. Accordingly the ingress of fluidization gas via the outlet 21 into the moving bed unit 33 is substantially avoided while the outflow of polymerized particles is substantially not hindered. At the same time there is a proper mixing of polymerized particles from the moving bed unit into the fluidized gas flow. The angle of diversion 36 is about 60°.

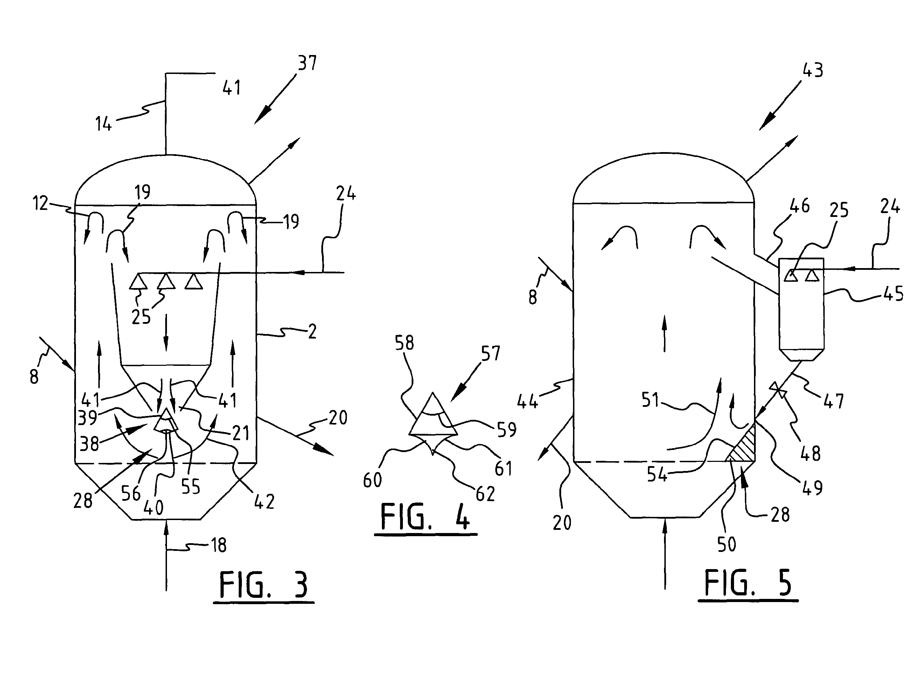

Figure 3 shows another reactor system 37 according to the invention. In this reactor system 37 the shielding means 28 according to the invention comprise a shielding element 38. This element 38 has a substantially conical upper section 39 and a substantially conical lower section 40. The conical upper section 39 and the conical lower section 40 diverge the polymerized particle outflow according to the arrows 41 and the fluidized gas according to the arrow 42, respectively. Again ingress of fluidization gas via the inlet 21 is substantially blocked and the outflow of polymerized particles substantially unhindered. The form of the shielding element 38 is such that the flow of fluidized gas and the flow of polymerized particles is gently and smoothly directed in the desired direction.

In figure 3 the shielding element 38 comprises an upper conical section 39 and a lower conical section 40. The upper conical section 39 has a diverging angle 55 of about 60° and a lower section 40 has a diverging angle 56 of about 120°.

Figure 5 shows another reactor system 43 according to the invention. The reactor system 43 comprises a fluidized bed unit 44 and a moving bed unit 45. The moving bed unit 45 is residing adjacent to the fluidized bed unit 44. An inlet 46 of the moving bed unit 46 opens into the interior of the fluidized bed unit 44. Polymerized particles enter the moving bed unit 45. An outlet 47 of the moving bed unit 45 is provided with a valve 48 and enters the fluidized bed unit 44. Beneath the site 49 where the outlet 47 enters into the fluidized bed unit 44 are arranged shielding means 28 according to the invention. The shielding means 28 have the form of a cross sectional triangular shielding element 50 with a surface 54 over which the polymerized particles slide into the moving bed unit 44 and are entrained following arrow 51 with the fluidized gas flow residing in the fluidized bed unit 44.

An alternative shielding element 57 according to the invention is shown in figure 4. The upper triangle section 58 has a diverging angle 59 of about 60°. The lower section 60 has a curved surface 61 of which the diverging angle 62 increases towards the upper section 58 from about 60° to about 130°.

It is noted that the shielding elements 38 and 57 are illustrated in side views and have a circular cross section.

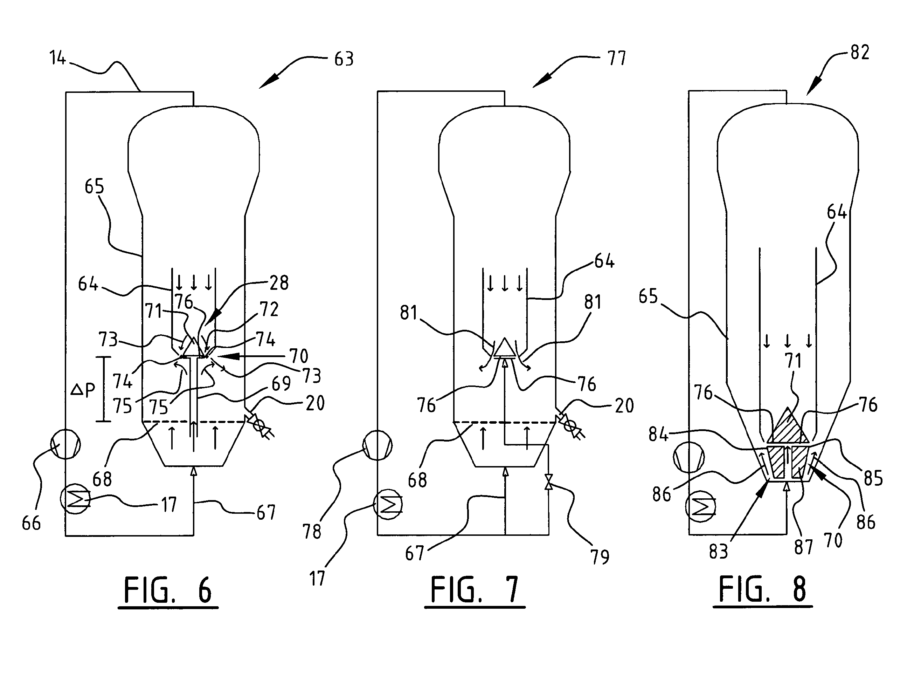

Figure 6 shows another reactor system 63 according to the invention. A moving bed unit 64 is coaxially arranged within a fluidized bed unit 65. Fluidized gas is fed via a compressor 66 and a line 67 into the fluidized bed unit 65 and passes through a distribution plate 68. The compressor is incorporated in the recirculation line 14 further comprising the heat exchanger 17. Part of the fluidized gas flows into a conduit 69 which is connected to pneumatic displacement means 70 incorporated in the shielding means 28. The pneumatic displacement means comprise a cone 71 which resides in an outlet 72 of the moving bed unit 64. Polymer particles are sidewise deflected over the cone 71 according to the arrow 73. This flow of polymer particles is sustained or improved by the pneumatic displacement means 70 directing the fluidization gas following the arrows 74 and 75 in sidewise streaming along the outlet 72 thereby by suction pressure improves and/or sustains the outflow of polymer particles according to the arrow 73. The cone 71 is thereto provided with a number of lateral conduits 76. Obviously, the pressure difference over the distribution plate up to the conduits 76 is important and determines the outflow of polymer particles.

Figure 7 discloses a reactor system 77 which is similar to the reactor system 63 illustrated in figure 6.

In the reactor system 77 the gas flow, preferably fluidization gas is fed via a compressor 78 and partly via a regulating valve 79 and a line 80 directly towards to the lateral conduits 76 formed in the cone 71. Accordingly, this provides more flexibility in the regulation and control of the outflow of polymer particles according to the arrow 81 out of the moving bed unit 64 due to the regulation of the gas flow and gas pressure using the compressor 78 and the valve 79.

Finally, figure 8 shows another reactor system 82 according to the invention which has a similar design as the reactor systems 63 and 77 illustrated in the figure 6 and 7, respectively. In this case the pneumatic displacement means 70 comprise means 83 for upwardly directing fluidization gas along the lateral deflecting means. To this extent the means 70 comprise mutually diverting surfaces 84 and 85 directing the fluidization gas following the arrows 86 over the conical circumference of the surfaces 84 and 85 uniformly along the lateral conduits 76 in the cone 71. Furthermore, the fluidized bed is provided with a diverting lower section 87 smoothly directing the fluidization gas following the arrows 86 along the conduits 76 thereby entraining polymer particles towards the upper region of the fluidized bed unit. Accordingly, this reactor system 82 is properly operating without the use of a distribution plate for uniformly distributing the fluidized gas. Accordingly, this reactor system 82 is less complex and therefore less expensive and there is a reduced risk for fouling of the distribution plate when present and fine particles enter into the space below such distribution plate.

## Claims

1. Reactor system for the catalytic polymerization of olefin monomer and optionally comonomer(s), comprising one or more inlets for olefin monomer, catalyst, optionally for comonomer, chain growth controllers or chain transfer agents, and/or inert gas, an outlet for gas and an outlet for polymer particles, which reactor system comprises at least one fluidized bed unit and at least one moving bed unit, wherein the fluidized bed unit comprises means for maintaining a fluidized bed in the fluidized bed unit and wherein the moving bed unit is provided with an inlet and an outlet which are connected to the fluidized bed unit, wherein in the fluidized bed unit is positioned shielding means such that via the outlet of the moving bed unit inflow of fluidization gas is inhibited and outflow of polymer particles allowed.

2. Reactor system according to claim 1, wherein the shielding means comprise a shielding element positioned beneath the outlet of the moving bed unit.

3. Reactor system according to claim 2, wherein the shielding element has at least one surface facing against the fluidization gas flow.

4. Reactor system according to claim 3, wherein the fluidization gas flow facing surface is flat, preferably is the shielding element rotatable.

5. Reactor system according to claim 3 or 4, wherein the fluidization gas flow facing surface is diverging in the direction of the fluidization gas flow.

6. Reactor system according to claim 1-5, wherein the shielding element has at least one surface facing the outlet of the moving bed unit.

7. Reactor system according to claim 6, wherein the outlet facing surface is flat or diverging in the direction of the polymerization particles outflow.

8. Reactor system according to claim 5 or 7, wherein the top angle is 5°-90°, preferably 10°-80°, more preferably 15°-65°.

9. Reactor system according to claim 1-8, wherein the shielding means are positioned near, in or through the outlet of the moving bed unit.

10. Reactor system according to claim 1-9, wherein the shielding means comprises pneumatic displacement means for sidewise directing gas at the outlet of the moving bed unit.

11. Reactor system according to claim 1-10, wherein the pneumatic displacing means comprise an inlet for fluidization gas.

12. Reactor system according to claim 1-11, wherein the means for maintaining the fluidized bed comprise an inlet for fluidization gas, which inlet is connected to the pneumatic displacing means.

13. Reactor system according to claim 1-12, comprising at least two moving bed units each comprising an inlet for fluidization gas.

14. Reactor system according to claim 1-13, wherein the pneumatic displacement means comprise lateral deflecting means connected to the outlet of the moving bed unit, which deflecting means comprise the means for sidewise directing gas at the outlet of the moving bed unit.

15. Reactor system according to claim 14, wherein the means for sidewise directing gas at the outlet of the moving bed unit comprise an inlet for fluidization gas.

16. Reactor system according to claim 14 or 15, wherein the pneumatic displacement means comprise means for upwardly directing fluidization gas along the lateral deflecting means.

17. Reactor system according to claim 1-16, wherein the shielding means are positioned near or on the distribution plate of the fluidized bed unit.

18. Reactor system according to claim 1-17, wherein the moving bed unit resides within, around or adjacent the fluidized bed unit.

19. Process for the catalytic polymerization of olefins,
wherein olefins are polymerized with a particulate catalyst, and optionally comonomer, chain growth controllers or chain transfer agents, and/or inert gas, wherein at least part of the polymerization reaction is carried out in a reactor system comprises at least one fluidized bed unit and at least one moving bed unit, wherein the fluidized bed unit comprises means for maintaining a fluidized bed in the fluidized bed unit and wherein the moving bed unit is provided with an inlet and an outlet which are connected to the fluidized bed unit, wherein the fluidized gas flow is shielded by shielding means such as to inhibit the inflow of fluidized gas into the moving bed unit and allow the outflow of polymerization particles.

20. Process according to claim 19, wherein the shielding means diverge the fluidized gas flow around the outlet.

21. Process according to claim 19 or 20, wherein the shielding means diverge the outflow of polymerized particles from the outlet of the moving bed unit.

22. Process according to claim 19-21, wherein separation fluidum is supplied to the moving bed, and preferably the separation fluidum is a gas or a liquid and selected from the group comprising an inert gas or liquid, such as nitrogen, C₁-C₁₂-alkane or olefins such as C₂-C₁₂-alkene, or mixtures thereof, and preferably the separation fluidum is a liquid evaporating under the residing polymerization conditions.

23. Process according to claims 19-22, wherein liquid olefins are added as separation fluidum such that the polymerization in the moving bed unit is a condensed mode polymerization.

24. Process according to any of the claims 19-23, wherein liquid olefins are added to the fluidized bed such that the polymerization in the fluidized bed is in a condensed mode polymerization.

25. Process according to any of the claims 19-24, wherein the separation fluidum comprises a polymerization monomer or comonomer, or mixture thereof.

26. Use of a reactor system according to any of the claims 1-18 for the catalytic polymerization olefins.
